# EUROPEAN PATENT APPLICATION

(11) **EP 2 056 244 A1**
(43) Date of publication of application: **06.05.2009**
(21) Application number: 07119555.6
(22) Date of filing: 29.10.2007
(51) Int. Cl.: G06Q 10/00

(54) **Method of generating event reminders in an electronic device**

(71) Applicant: Research In Motion Limited, Waterloo, Ontario N2L 3W8 (CA)
(72) Inventor: Bender, Michael, Waterloo Ontario N2T 2S6 (CA)
(74) Representative: Rickard, David John

(57) **Abstract**

A reminder method and user interface for an electronic device, including displaying a picture on the electronic device, activating a timer associated with the picture for generating a reminder after a programmable time period, and generating the reminder on the electronic device after the programmable time period, wherein the reminder includes displaying the picture. Management of alerts or reminders for a calendar, said functionality comprising the snooze option for deferring or postponing a further alert within a predetermined time period.

## Description

The present disclosure relates generally to electronic devices, and in particular to a method of generating event reminders in an electronic device.

Calendar and task reminders are well known for notifying a user of an appointment or task. Such reminders are often presented on the display of a desktop computer or portable electronic device, in the form of a message window that indicates the time and particulars of an appointment or task for the user. The visual reminder may be accompanied by an alarm, such as a unique ring tone, or by vibrating of the device to alert the user to the existence of the reminder. It is also known in the art to include a personalized image in a reminder message (e.g. image of an alarm clock), and for cameras to attach user notes to a picture.

Timers are also known for generating audible reminder alarms. Alarm clocks and oven timers are but two examples of such well known timers.

There are some circumstances in which a user may require multiple reminders for different tasks/events. For example, a user may require reminders of having begun a laundry cycle, having placed something in a freezer to chill (without freezing), where eggs have been hidden for a child's Easter egg hunt, etc. Prior art electronic device reminders and timers are not particularly well suited to providing a user with multiple reminders. Setting multiple reminders on an electronic device is time consuming (i.e. the user must enter a description of the event/task and a time for generation of the reminder, whereas conventional timers provide no indication of what the event/task is and are not normally capable of tracking multiple simultaneous timed events/tasks.

Thus, in general, a problem exists in providing a user with a simple and quick mechanism to set timed reminders for one or more events/tasks that include an indication of what each event/task is.

### GENERAL

In general a method is set forth that may quickly set one or more timed reminders (e.g. 5 minutes, 20 minutes, 2 hours, 1 week, etc) that are associated with respective pictures taken using a mobile electronic device, such as a digital camera, PDA, mobile phone, and the like. Thus, a user may be able to trigger multiple reminders for different events/tasks based upon images that are associated with the particular events/tasks, without having to enter textual descriptions of the events/tasks. As but one example, a user may take a picture of his/her laundry machine using the mobile electronic device, when putting in laundry to be washed, and sets a timer associated with the picture for the length of the wash cycle. Once the set time has elapsed (i.e. at the end of the wash cycle), the picture of the laundry machine may be automatically displayed on the user's mobile electronic device (with or without an audible reminder and/or device vibration, etc.) thereby reminding the user that his/laundry is done.

According to one aspect, a reminder method is set forth for an electronic device, that me comprise displaying a picture on said electronic device; activating a timer associated with said picture for generating a reminder after a programmable time period; and generating said reminder on said electronic device after said programmable time period, said reminder including display of said picture.

According to another aspect, a user interface is set forth for an electronic device, that may comprise an input device; a first window display for displaying a picture on said electronic device; a second window display for presenting a first menu for activating a timer associated with said picture; a third window display for setting a programmable time period; and a fourth window display for displaying a reminder after said programmable time period, said reminder including display of said picture.

### BRIEF DESCRIPTION OF THE DRAWINGS

The embodiments will be better understood with reference to the following Figures in which like numerals denote like parts and in which:

Figure 1 is a schematic diagram of a wireless communication system;

Figure 2 is a block diagram of components of a portable electronic device;

Figures 3A - 3D are screen shot representations of a graphical user interface of the portable electronic device of Figure 2 for implementing a method of setting and generating event reminders, according to an exemplary embodiment;

Figure 4 is a flowchart showing a method of setting event reminders according to an exemplary embodiment; and

Figure 5 is a flowchart showing a method of generating event reminders according to an exemplary embodiment.

### DESCRIPTION OF PREFERRED EMBODIMENTS

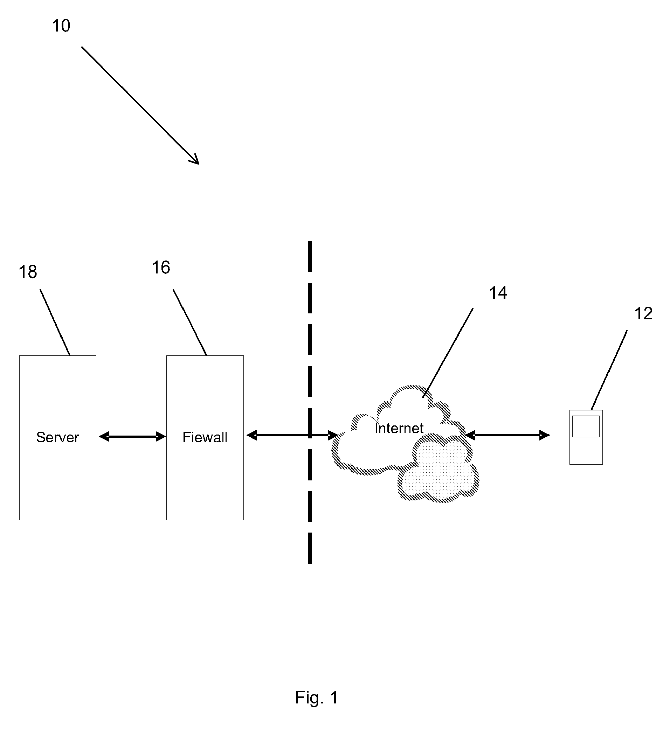

Figure 1 shows an exemplary communication system 10 for a portable electronic device 12. According to the illustrated embodiment, the portable electronic device 12 is operable to effect communications over a radio communications channel and communicates with a base station (not shown) while located within a coverage area that is defined by the base station. However, the portable electronic device 12 is not limited to a device capable of effecting communications. Indeed the exemplary method of generating event reminders set forth in greater detail below, may advantageously be implemented within a multitude of devices, some of which are capable of communications and others of which are not (e.g. digital cameras, PDAs, mobile phones, smart telephones, laptop computers, etc.)

In the illustrated embodiment, the base station (not shown) is part of a wireless network that is in communication with the Internet 14. Data is delivered to the portable electronic device 12 via wireless transmission from the base station. Similarly, data is sent from the portable electronic device 12 via wireless transmission to the base station.

It will be appreciated that the portable electronic device 12 of Figure 1 is movable within a coverage area of the base stations and can be moved to coverage areas defined by other base stations. Further, as will be understood by one of ordinary skill in the art, wireless networks include GSM/GPRS, CDPD, TDMA, iDEN, Mobitex, DataTAC networks, EDGE, EVDO or UMTS and broadband networks such as Bluetooth and variants of 802.11.

A server 18 handles wireless client requests from the portable electronic device 12. A firewall, or proxy server, 16, is provided between the server 18 and the Internet 14. The server 18 further operates as a Mail Server, which communicates with an email client of the portable electronic device 12 to allow a user to send and receive email messages.

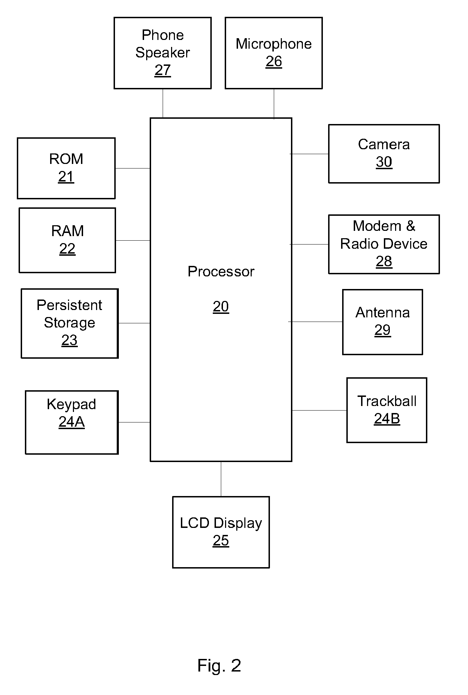

Figure 2 is a block diagram showing certain components within an exemplary embodiment of the portable electronic device 12. The portable electronic device 12 includes a processor 20 connected to a read-only-memory (ROM) 21 that contains a plurality of applications executable by the processor 20 for enabling each portable electronic device 12 to perform certain functions including, for example, PIN message functions, SMS message functions, address book and calendaring functions, camera functions, and cellular telephone functions. The processor 20 is also connected to a random access memory unit (RAM) 22 and a persistent storage device 23 to facilitate various non-volatile storage functions of the portable electronic device 12. The processor 20 receives input from one or more input devices, including a keypad 24A and trackball 24B. The processor 20 outputs to one or more output devices, including an LCD display 25. A microphone 26 and phone speaker 27 are connected to the processor 20 for cellular telephone functions. The processor 20 is also connected to a modem and radio device 28. The modem and radio device 28 is used to connect to wireless networks and transmit and receive voice and data communications through an antenna 29. A camera 30 provides functionality for taking pictures that can be viewed on display 25, sent to other users via wireless email, saved to persistent storage 23 for later viewing, etc.

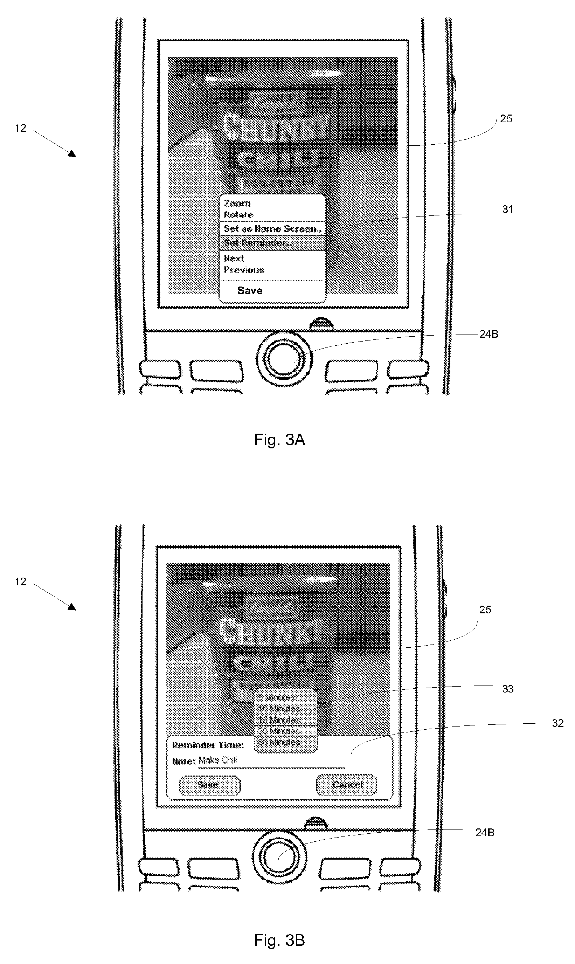

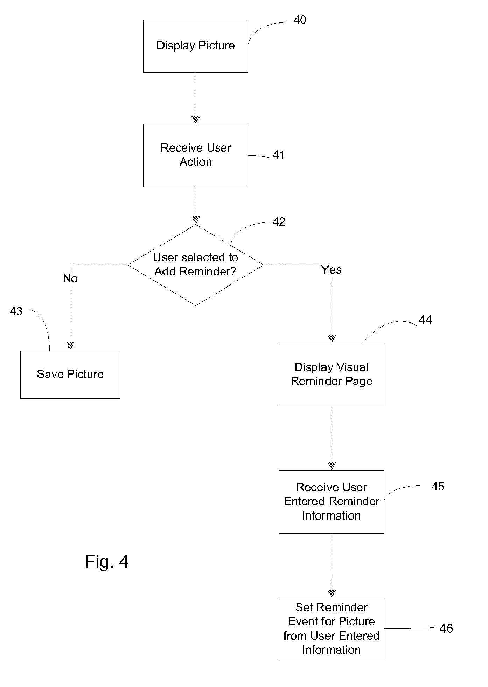

According to an exemplary method, as shown in Figures 3A- 3D, 4 and 5, portable electronic device 12 may be used to display a picture (step 40 in Figure 4) and a menu 31 on display 25 associated with the picture (Figure 3A). In one embodiment, the picture is taken using the camera 30. Alternatively, the picture may be received via email, retrieved from persistent storage 23, etc. The menu 31 includes conventional menu selection items such as "Zoom", "Rotate", "Save", etc., but according to the exemplary embodiment also includes a "Set Reminder..." menu selection item 31 for quickly setting a timed reminder associated with the picture (e.g. timed reminder to make chili for dinner).

Upon making a selection (step 41), a determination is made (step 42) as to whether the picture is to be saved without setting a timed reminder (step 43), or whether to display a new menu window 32 (step 44), as shown in Figure 3B, for entering particulars of the timed reminder (step 45). The menu window 32 may include a drop-down menu 33 for selecting from a plurality of preconfigured time periods (e.g. 5 minutes, 10 minutes, 15 minutes, etc.) Alternatively, a time period may be entered directly in the "Reminder Time:" field of menu item 32, for example using keypad 24. Also, although not required for the purpose of setting the timed reminder, it is possible to enter a textual description of the event/task in the "Note:" field of menu item 32. Once particulars of the timed reminder have been entered, the reminder is "set" (i.e. activated) by selecting the "Save" button in menu 32 (step 46).

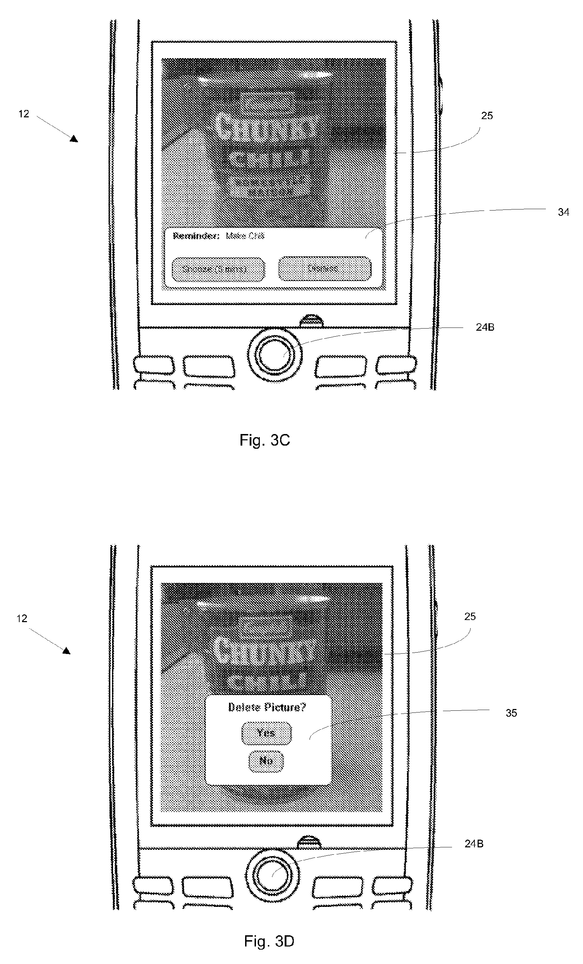

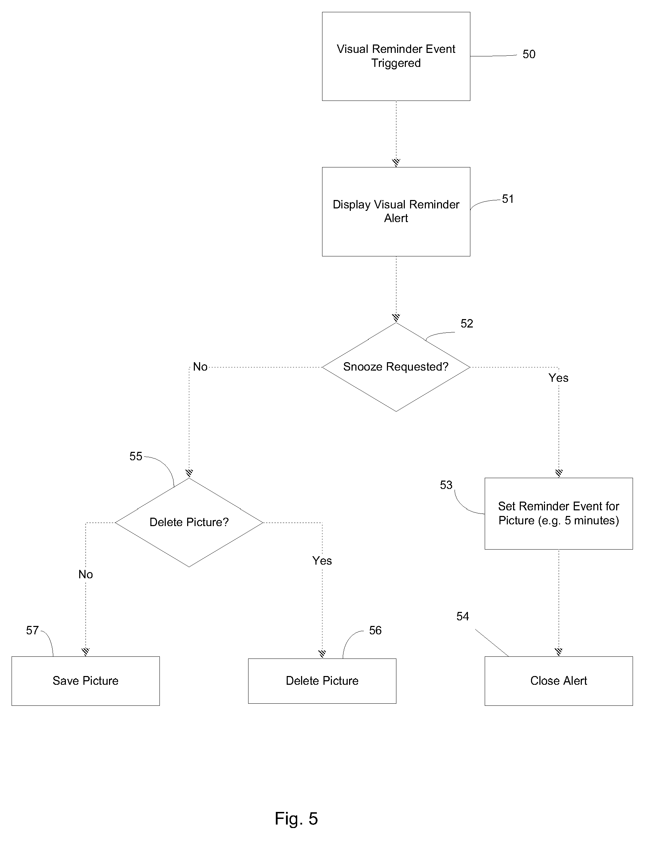

After the elapsed time period, the reminder is triggered within device 12 (step 50 in Figure 5), and automatically displayed along with the previously presented picture (step 51), as shown in Figure 3C, thereby providing a reminder for the event/task (e.g. reminder to make chili). The reminder may be cancelled by selecting "Dismiss" button (i.e. a "No" at step 52) or, optionally, may be deferred by selecting a "Snooze" button (i.e. a "Yes" at step 52) to repeat the reminder after a predetermined (optionally selectable) further time period (e.g. 5 minutes, 10 minutes, etc.), with reference to step 53, in response to which the reminder is closed (step 54).

As shown in Figure 3D, a menu window 35 may be presented (step 55) for either deleting (step 56) or saving (step 57) the picture.

A person of ordinary skill in the art will understand that the exemplary method set forth in Figures 4 and 5 may be repeated an additional one or more times to set and display multiple reminders (either concurrently or sequentially) based on additional pictures representative of additional events/tasks to be reminded.

A specific embodiment has been shown and described herein. However, modifications and variations may occur to those skilled in the art. For example, as discussed above, although the exemplary embodiment has been described in terms of implementation on a portable handheld electronic device, the principles set forth herein may be applied to other devices such as desktop computers, etc. All such modifications and variations are believed to be within the sphere and scope of the present embodiment.

## Claims

1. A reminder method for an electronic device, comprising:
displaying a picture on said electronic device;
activating a timer associated with said picture for generating a reminder after a programmable time period; and
generating said reminder on said electronic device after said programmable time period, said reminder including display of said picture.

2. A reminder method as claimed in claim 1, further comprising associating additional information with said reminder for display on said electronic device.

3. A reminder method as claimed in claim 1 or claim 2, further comprising deferring said reminder for a further programmable time period.

4. A reminder method as claimed in any one of claims 1 to 3, further comprising saving said picture.

5. A user interface for an electronic device, comprising:
an input device;
a first window display for displaying a picture on said electronic device;
a second window display for presenting a first menu for activating a timer associated with said picture;
a third window display for setting a programmable time period; and
a fourth window display for displaying a reminder after said programmable time period, said reminder including display of said picture.

6. A user interface as claimed in claim 5, including a further window display for associating additional information with said reminder for display in said fourth window display.

7. A user interface as claimed in claim 5 or claim 6, including a further window for deferring said reminder for a further programmable time period.

8. A user interface as claimed in any one of claims 5 to 7, including a further window for saving said picture.

9. A portable electronic device comprising a memory (22) having recorded thereon statements and instructions for execution by a processor (20) to carry out the method of any one of claims 1 to 4.

10. A machine readable medium storing instructions which, when executed by a processor of a computing device adapt said device to perform the method of any of claims 1 to 4.

11. A machine readable medium storing instructions which when executed by a processor of a computing device having a display adapt the device to implement a user interface as claimed in any of claims 5 to 8.

## Amended claims

### Amended claims in accordance with Rule 137(2) EPC.

**1.** A reminder method for an electronic device, comprising:
taking a picture using said electronic device;
displaying (40) said picture on said electronic device;
activating a timer associated with said picture for generating a reminder after a programmable time period; and
generating (51) said reminder on said electronic device after said programmable time period, said reminder including display of said picture.

**2.** A reminder method as claimed in claim 1, further comprising associating additional information with said reminder for display on said electronic device.

**3.** A reminder method as claimed in claim 1 or claim 2, further comprising deferring (53) said reminder for a further programmable time period.

**4.** A reminder method as claimed in any one of claims 1 to 3, further comprising saving (57) said picture.

**5.** An electronic device, comprising:
a camera (30) for taking pictures;
a user interface for generating a first window display (25) for displaying (40) a picture taken by said camera (30) on said electronic device; a second window display for presenting a first menu (31) for activating a timer associated with said picture; a third window display (33) for setting a programmable time period; and a fourth window display for displaying (51) a reminder after said programmable time period, said reminder including display of said picture.

**6.** A user interface as claimed in claim 5, including a further window display for associating additional information with said reminder for display in said fourth window display.

**7.** A user interface as claimed in claim 5 or claim 6, including a further window for deferring (53) said reminder for a further programmable time period.

**8.** A user interface as claimed in any one of claims 5 to 7, including a further window for saving (57) said picture.

**9.** A portable electronic device comprising a memory (22) having recorded thereon statements and instructions for execution by a processor (20) to carry out the method of any one of claims 1 to 4.

**10.** A machine readable medium storing instructions which, when executed by a processor of a computing device adapt said device to perform the method of any of claims 1 to 4.

**11.** A machine readable medium storing instructions which when executed by a processor of a computing device having a display adapt the device to implement a user interface as claimed in any of claims 5 to 8.
